# EUROPEAN PATENT APPLICATION

(11) **EP 1 843 585 A1**
(43) Date of publication of application: **10.10.2007**
(21) Application number: 06712232.5
(22) Date of filing: 24.01.2006
(51) Int. Cl.: H04N 7/00

(54) **INFORMATION DISTRIBUTION DEVICE AND INFORMATION DISTRIBUTION METHOD**

(30) Priority: 25.01.2005 JP 2005016453
(71) Applicant: MATSUSHITA ELECTRIC INDUSTRIAL CO., LTD., Osaka 571-8501 (JP)
(72) Inventor: TSUSAKA, Yuko, c/o Mats. El. Ind. Co., Ltd., IPROC, Chuo-ku, Osaka-shi, Osaka 540-6319 (JP); KAJIMOTO, Kazuo, c/o Mats. El. Ind. Co., Ltd., IPROC, Chuo-ku, Osaka-shi, Osaka 540-6319 (JP); FUJIOKA, Soichiro, c/o Mats. El. Ind. Co., Ltd., IPROC, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2006/301016
(87) International publication number: WO 2006/080291

(57) **Abstract**

In order to protect a content holder, a server device (20) holds a content and distribution control information specifying a number of terminals to which the same part of the content can be streamed at the same time. When a playback request pertaining to the content is received from a plurality of terminals, distribution of the content to the terminals is controlled such that the number of terminals specified in the distribution control information is not exceeded.

## Description

### TECHNICAL FIELD

The present invention relates to technology for distributing information via a network, and in particular to technology for distributing content while protecting the rights of a content holder.

### BACKGROUND ART

Digital broadcasts such as BS digital, 110-degree CS digital and terrestrial digital broadcasts have begun being broadcasted in recent years. Information with only a very small degree of degradation can be obtained by copying digital content (hereinafter, simply "content") that has been broadcast in a digital broadcast from a broadcast station.
In order to control such copying, CCI (Copy Control Information) is attached to content broadcasted from the broadcast station. One exemplary method using CCI involves inserting a digital copy control descriptor into the content, and with use of the descriptor, assigning one of three kinds of restrictions, namely "Copy Free", "Copy Once" and "Copy Never", to copying of the content. Here, "Copy Free" indicates that copying can be performed without any constraints, "Copy Once" indicates that only first generation copying can be performed, and "Copy Never" indicates that copying is prohibited.

Also, there has been proposed technology for enabling a terminal device connected to a small-scale network such as a home network to use content stored in a server device (e.g., patent document 1). Patent document 1 discloses technology for, in the case of private use in a household, permitting the copying of content from a server device by attaching use conditions for each terminal device.

However, in the case of performing streaming distribution, in which content is played back immediately after reception without being accumulated, it is possible even when CCI has been attached to the content for different portions of the content to be simultaneously played back on a number of terminal devices, and for the same portion of the content to be simultaneously played back on a number of terminal devices.
Patent document 1: Japanese Patent Application Publication No. 2002-73861

### DISCLOSURE OF THE INVENTION

### PROBLEMS SOLVED BY THE INVENTION

The aforementioned ability to simultaneously play back the same portion of content on a number of terminal devices substantially amounts to content duplication not intended by the content holder, and therefore the rights of the content holder are not being sufficiently protected.
The present invention has been achieved in view of the above problem, and aims to provide an information distribution device and information distribution method that can distribute content while protecting the rights of a content holder and eliminating the substantial content duplication not intended by the content holder.

### MEANS TO SOLVE THE PROBLEMS

In order to achieve the above aim, the present invention is an information distribution device that is connected to a plurality of terminal devices and controls streaming of a content to the plurality of terminal devices, the information distribution device including: a hold unit operable to hold the content and distribution control information that indicates a maximum number of the terminal devices to which a same portion of the content can be streamed; and a distribution control unit operable to prohibit simultaneous streaming of the same portion of the content to a greater number of the terminal devices than the maximum number indicated by the distribution control information.

### EFFECTS OF THE INVENTION

This structure enables protecting the rights of a content holder since the transmission of the same portion of content to more terminal devices than indicated by the distribution control information is prohibited, unlike conventional server devices that can stream content to any number of terminal devices that exist in the same household.
Here, the distribution control unit may permit simultaneous streaming of the same portion of the content to a same or smaller number of the terminal devices than the maximum number indicated by the distribution control information, and permit simultaneous streaming of differing portions of the content to an unlimited number of the terminal devices.

This structure protects the rights of the content holder by preventing the transmission of the same portion of content to more terminal devices than indicated by the distribution control information, and also ensures convenience for terminal device users since it is possible for different portions of the content to be streamed to more terminal devices than indicated by the distribution control information.
Here, the distribution control unit may include a management subunit operable to, when the content is being streamed, manage a distribution position information piece indicating a content portion being streamed to one or more of the terminal devices; a reception subunit operable to receive, from one of the terminal devices, request position information indicating a portion of the content requested for playback; and a judgment subunit operable to judge, with use of the distribution position information piece and the request position information, that the requested portion cannot be streamed if a number of the terminal devices to which the requested portion is being streamed exceeds the maximum number indicated by the distribution control information, and that the requested portion can be streamed if the number of terminal devices to which the requested portion is being streamed is less than or equal to the maximum number indicated by the distribution control information, and the distribution control unit may prohibit streaming of the requested portion of the content to the one of the terminal devices if the judgment subunit has judged that the requested portion cannot be streamed.

According to this structure, the server device judges to how many terminal devices the same portion of content is being streamed by managing information that indicates the portions of content that are being streamed to terminal devices, thereby enabling preventing the same portion of content from being streamed to more terminal devices than indicated by the distribution control information.
Here, the management subunit may include a generation part operable to, if streaming of the requested portion of the content to the one of the terminal devices has been permitted according to the judgment of the judgment subunit, generate a new distribution position information piece indicating the requested portion of the content; and an update part operable to, when the content is being streamed, periodically acquire a playback position from the one or more terminal devices to which the content is being streamed, and update the distribution position information pieces according to the acquired playback position.

According to this structure, the server device periodically updates the information indicating the portions of content that are being streamed to terminal devices, thereby enabling accurately judging at all times to how many terminal devices the same portion of content is being streamed.
Here, if the judgment subunit has judged that the requested portion cannot be streamed, the distribution control unit may select, according to the distribution position information piece managed by the management subunit, a portion of the content that is being streamed to a smaller number of the terminal devices than the maximum number indicated by the distribution control information, and permit streaming of the selected portion to the one of the terminal devices.

According to this structure, even if a portion of content requested by a terminal device cannot be streamed, the server device streams another portion of the same content without exceeding the maximum number of terminal devices specified by the distribution control information, thereby improving convenience for terminal device users.
Here, upon the reception subunit receiving, from the one of the terminal devices to which the content is not being streamed, the request position information indicating the requested portion of the content and time information indicating a time at which the requested portion is to be played back, the management subunit may further generate the new distribution position information piece that includes the time information, and upon a current time reaching the time indicated by the time information, the distribution control unit may permit streaming of the portion of the content indicated by the new distribution position information piece to the one of the terminal devices.

According to this structure, the server device receives time information from the terminal devices, thereby enabling distributing requested content at the time indicated by the received time information. Furthermore, generating the distribution position information upon receiving the playback request and the time information enables performing so-called area retainment even before distribution of the content.
Here, upon reception of a pause request from the one or more terminal devices to which the content is being streamed, the management subunit may measure a pause time, upon the pause time exceeding a predetermined time, the management subunit may add, to the corresponding distribution position information piece, information indicating that the pause time has exceeded the predetermined time, and the judgment subunit may perform the judgment without use of the corresponding distribution position information piece that has added thereto the information indicating that the pause time has exceeded the predetermined time.

According to this structure, a retained portion of content can be yielded to another terminal device when the pause time has exceeded the predetermined time, thereby enabling the server device to more effectively control content use between terminal devices.
Here, the judgment subunit may perform the judgment with respect to a predetermined length of the content, the predetermined length including the requested portion.

This structure more reliably avoids overlapping playback at the same position in the content since the predetermined length of the content is not streamed to more terminal devices than indicated by the distribution control information.
Here, the judgment subunit may perform the judgment with respect to the predetermined length that has been determined according to which of normal playback processing and special playback processing the one of the terminal devices is performing.

According to this structure, the predetermined length of the content is made longer for terminal devices that are performing special playback such as fast forwarding, rewinding, etc. than terminal devices performing normal playback, thereby enabling the smooth performance of special playback and simultaneous streaming judgment processing.
Here, the distribution control unit may further include an additional information generation subunit operable to, when the content is being streamed to any of the terminal devices, generate additional information that visually represents a portion of the content that can be played back in the any of the terminal devices.

This structure enables the server device to provide the terminal devices with information for displaying, on the terminal devices, portions of the content that can be played back (areas being retained).
Here, when the content is being streamed to two or more of the plurality of terminal devices, the additional information generation subunit may generate, according to the distribution position information pieces, the additional information that additionally visually represents a portion of the content that can be played back in another one of the two or more terminal devices.

This structure enables providing the terminal devices with more detailed information pertaining to the content being viewed, for display on the terminal devices.
Here, the distribution control information may further include information that indicates a range according to which the content can be streamed, and the distribution control unit may further judge whether each of the terminal devices exists in the range indicated by the distribution control information, and prohibit streaming of the content to a terminal device, from among the plurality of terminal devices, that has been judged to exist outside the range.

According to this structure, the streaming of content can be restricted to, for example, only terminal devices existing in the same household as the server, thereby further protecting the rights of the content holder.
Here, the distribution control information may further include information for determining, according to a content accumulation function of each of the terminal devices, whether streaming of the content can be performed, and the distribution control unit may further receive, from each of the terminal devices, attribute information indicating a presence or absence of the content accumulation function, and judges, according to the attribute information and the distribution control information, whether the content can be streamed.

According to this structure, the rights of the content holder are further protected by suppressing the streaming of content to terminal devices that have an accumulating function.
Here, the information distribution device may further include a distribution control information generation unit operable to generate the distribution control information.
According to this structure, the server device can generate distribution control information, thereby enabling a user to set distribution control information for user-created content, in addition to content received from a broadcast station.

Also, the present invention is a transmission device including: a hold unit operable to hold a content; a distribution control information generation unit operable to generate distribution control information that indicates a maximum number of devices to which a same portion of the content can be streamed; and a transmission unit operable to transmit the content and the distribution control information to a transmission-destination device.
This structure enables protecting the rights of a holder of content being transmitted.

### BRIEF DESCRIPTION OF THE DRAWINGS

Fig. 1 shows a system structure of an information distribution system 1;
Fig.2 is a functional block diagram showing a functional structure of a broadcast station device 10;
Fig.3 shows a data structure of content broadcasted from the broadcast station device 10;
Fig.4A is a table associating values of Stream_control_type1 with meanings thereof, and Fig. 4B is a table associating values of Stream_control_type2 with meanings thereof;
Fig. 5 is a functional block diagram showing a functional structure of a server device 20;
Fig. 6 shows a data structure of a distribution management table 130;
Fig.7 shows a data structure of a terminal device management table 140;
Fig.8 is a functional block diagram showing a functional structure of a TV 30;
Fig.9 shows screen information 320 displayed on a display unit 308;
Fig.10 is a flowchart showing operations of the information distribution system 1;
Fig. 11 is a flowchart showing operations of the information distribution system 1, continuing from Fig. 10;
Fig. 12 is a flowchart showing operations of the information distribution system 1, continuing from Fig. 11;
Fig. 13 is a flowchart showing operations of content generation processing performed by the broadcast station device 10;
Fig. 14 is a flowchart showing operations of distributability judgment processing performed by the server device 20;
Fig. 15 is a flowchart showing operations of distributability judgment processing performed by the server device 20, continuing from Fig.14;
Fig. 16 is a flowchart showing operations of additional information generation processing performed by the server device 20; and
Fig. 17A shows an additional information image 400a, Fig. 17B shows an additional information image 400b, Fig. 17C shows an additional information image 400c, Fig. 17D shows an additional information image 400d, and Fig. 17E shows an additional information image 400e.

### DESCRIPTION OF THE CHARACTERS

- 1: information distribution system
- 10: broadcast station device
- 20: server device
- 30: TV
- 40: PC
- 50: PDA
- 101: content information input unit
- 102: input unit
- 103: copy control information setting unit
- 104: distribution control information setting unit
- 105: content generation unit
- 106: content transmission unit
- 201: reception unit
- 202: content storage unit
- 203: distribution control unit
- 204: input unit
- 205: output unit
- 211: reading unit
- 212: area retaining unit
- 213: distribution request judgment unit
- 214: distribution unit
- 215: encoder
- 216: output information generation unit
- 217: additional information generation unit
- 218: management information storage unit
- 219: time management unit
- 301: operation request input unit
- 302: operation request information generation unit
- 303: output unit
- 304: input unit
- 305: information separation unit
- 306: decoder
- 307: information composition unit
- 308: display unit
- 309: time code extraction unit

### BEST MODE FOR CARRYING OUT THE INVENTION

The following describes an information distribution system 1 that is an embodiment of the present invention, with reference to the drawings.

### Structure

### 1. Information distribution system 1

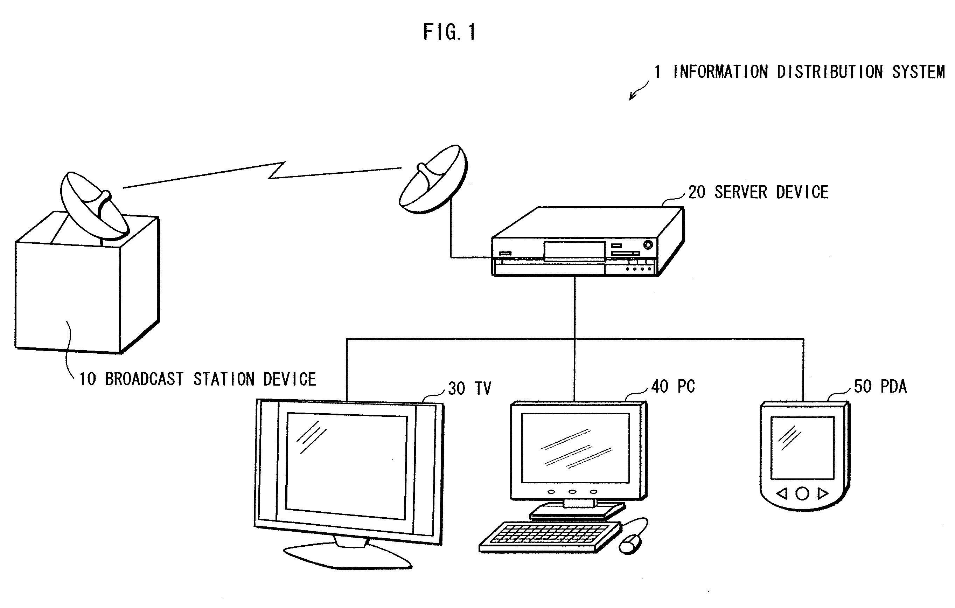

Fig.1 shows a system structure of an information distribution system 1. As shown in Fig.1, the information distribution system 1 includes a broadcast station device 10, a server device 20, a TV 30, a PC 40, and a PDA 50.
The broadcast station device 10 is a device installed in a broadcast station. The broadcast station device 10 includes an antenna, and broadcasts content over digital broadcast waves via the antenna.

The server device 20 receives the content broadcasted from the broadcast station device 10, and stores the received content. The server device 20 also receives operation request information from the TV 30, the PC 40 and the PDA 50 (hereinafter, also generically called "terminal devices"), and performs processing according to the received operation request information. If the operation request information indicates content playback, the server device 20 determines whether the content is distributable, and streams the content to a terminal device if the judgment is in the affirmative.

Note that in the present embodiment, the TV 30 and the PC 40 are connected to the server device 20 via a LAN, and the PDA 50 is connected to the server device 20 via a wireless LAN.

### 2. Structure of the broadcast station device 10

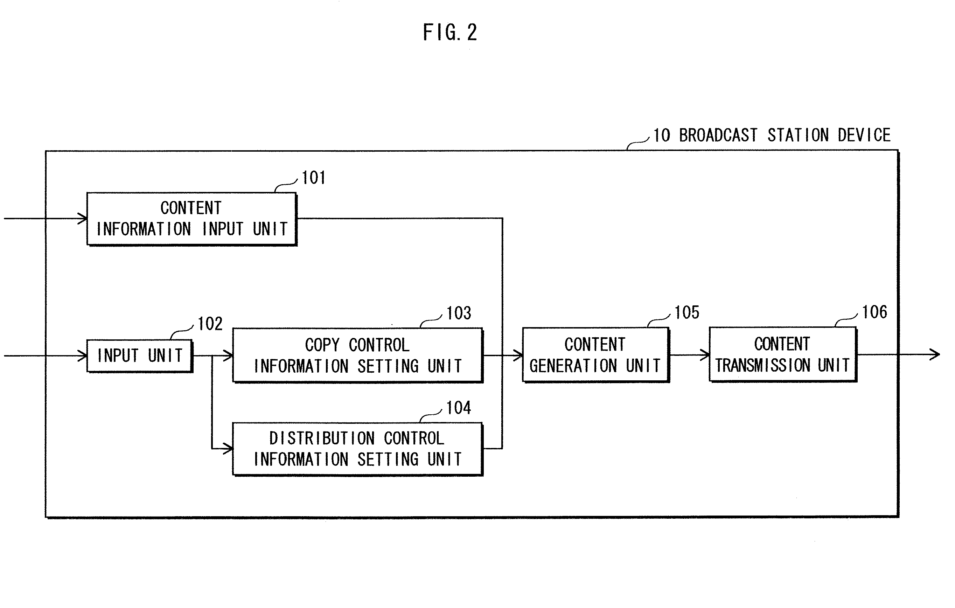

Fig.2 is a functional block diagram showing a functional structure of the broadcast station device 10. As shown in Fig.2, the broadcast station device 10 includes a content information input unit 101, an input unit 102, a copy control information setting unit 103, a distribution control information setting unit 104, a content generation unit 105, and a content transmission unit 106.

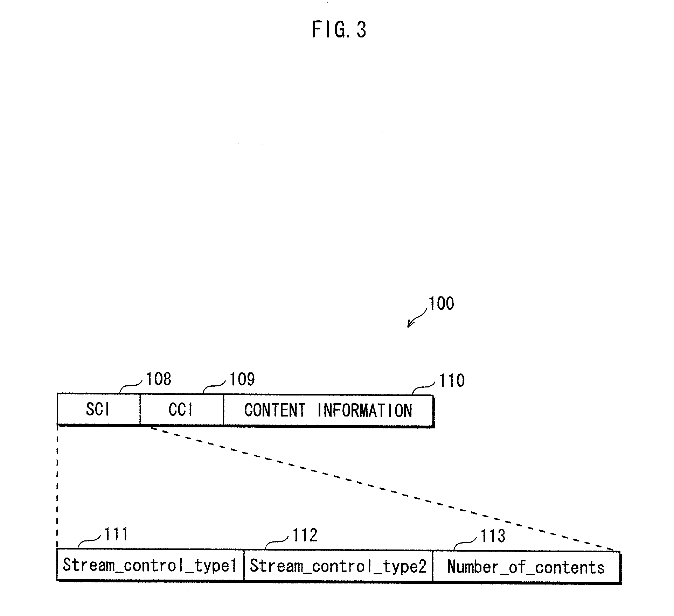

The broadcast station device 10 generates a content 100 shown in Fig. 3, and broadcasts the generated content 100. The content 100 includes distribution control information (hereinafter, called "SCI (Streaming Control Information)") 108, CCI 109 and content information 110.

### (1) Content irformation input unit 101

The content information input unit 101 receives an input of the content information 110. The content information 110 is video content such as a movie, a drama, a sports program, news, or the like.

### (2) Input unit 102

The input unit 102 receives an input of CCI setting information for setting of the CCI 109, and SCI setting information for setting of the SCI 108. The input unit 102 outputs the received CCI setting information to the copy control information setting unit 103, and outputs the received SCI setting information to the distribution control information setting unit 104.

### (3) Copy control information setting unit 103

The copy control information setting unit 103 sets the CCI based on the CCI setting information received from the input unit 102.
As previously mentioned, the CCI is information indicating copy restrictions on content information, and can have any of the bit patterns 00, 10 and 11. The bit pattern 00 indicates Copy Free (copying can be performed without any restrictions), the bit pattern 10 indicates Copy Once (only first generation copying may be performed), and the bit pattern 11 indicates Copy Never (copying is prohibited). Note that for simplicity in the description of the present embodiment, the input unit 102 is assumed to receive CCI with the bit pattern 10 (only first generation copying may be performed), and the copy control information setting unit 103 is assumed to set the CCI 109 to the bit pattern 10. The copy control information setting unit 103 outputs the CCI 109 that has been set to 10 to the content generation unit 105.

### (4) Distribution control information setting unit 104

The distribution control information setting unit 104 sets the SCI 108 based on the SCI setting information received from the input unit.
The SCI 108 is information indicating distribution restrictions on content information, and as shown in Fig.3, includes Stream_control_type1 (111), Stream_control_type2 (112) and Number_of_contents (113).

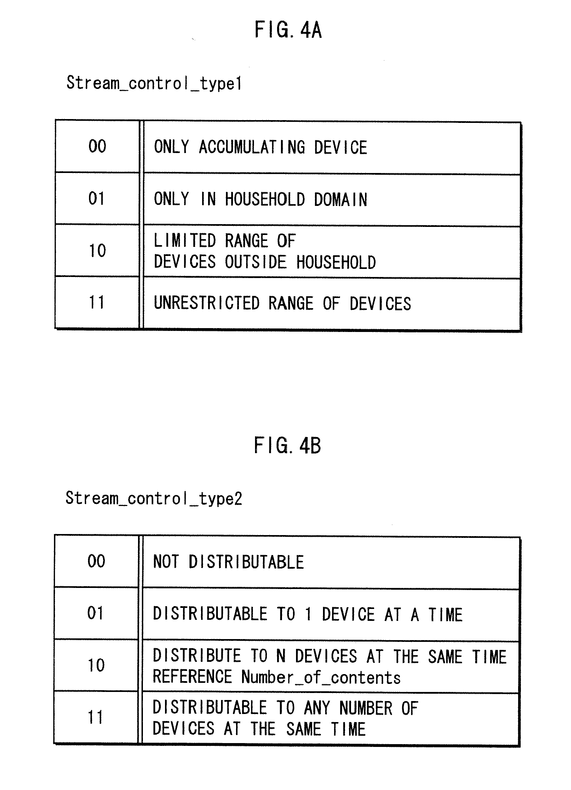

Stream_control_type1 is a 2-bit information piece indicating a range in which the content is distributable, and can have any of the bit patterns 00, 01, 10, and 11. Fig.4A shows the range in which the content information 110 can be streamed in association with the bit patterns.
The bit pattern 00 indicates that the content information 110 cannot be streamed to any terminal other than the terminal storing the content information 110. The bit pattern 01 indicates that the content information 110 can only be streamed to a device in the same household as the terminal storing the content information 110. The bit pattern 10 indicates that the content information 110 can be streamed to a limited range of devices outside the household. The bit pattern 11 indicates that the content information 110 can be streamed without any restrictions regarding range.

Stream_control_type2 is a 2-bit information piece indicating a number of devices to which the content can be streamed, and similarly to Stream_control_type1 can have any of the bit patterns 00, 01, 10, and 11. Fig.4B shows the number of devices to which the content information can be streamed in association with the bit patterns.
The bit pattern 00 indicates that the content information 110 cannot be streamed to any terminal other than the terminal storing the content information 110. The bit pattern 01 indicates that the same portion of the content information 110 can only be streamed to one device at the same time. The bit pattern 10 indicates that the same portion of the content information 110 can be streamed to N devices at the same time, and further indicates that N is determined by referencing Number_of_contents. The bit pattern 11 indicates that the same portion of the content information 110 can be streamed to a certain number of devices at the same time.

Number_of_contents (113) is a 4-bit information piece indicating a numerical value that, if Stream_control_type2 (112) is set to 10, indicates to how many devices the content information 110 can be streamed. For example, if Number_of_contents (113) indicates "3", the same portion of the content information 110 can be streamed to three devices at the same time.

The distribution control information setting unit 104 generates the SCI by setting the values of Stream_control_type1 (111), Stream_control_type2 (112) and Number of contents (113) based on the SCI setting information, and outputs the generated SCI 108 to the content generation unit 105.

### (5) Content generation unit 105

The content generation unit 105 receives the content information 110 from the content information input unit 101, receives the CCI 109 from the copy control information setting unit 103, and receives the SCI 108 from the distribution control information setting unit 104. The content generation unit 105 generates the content 100 shown in Fig.3 with use of the received content information 110, CCI 109 and SCI 108. The content generation unit 105 outputs the generated content 100 to the content transmission unit 106.

### (6) Content transmission unit 106

The content transmission unit 106 includes an antenna, and upon receiving the content 100 from the content generation unit 105, broadcasts the received content 100 via the antenna.

### 3. Structure of the server device 20

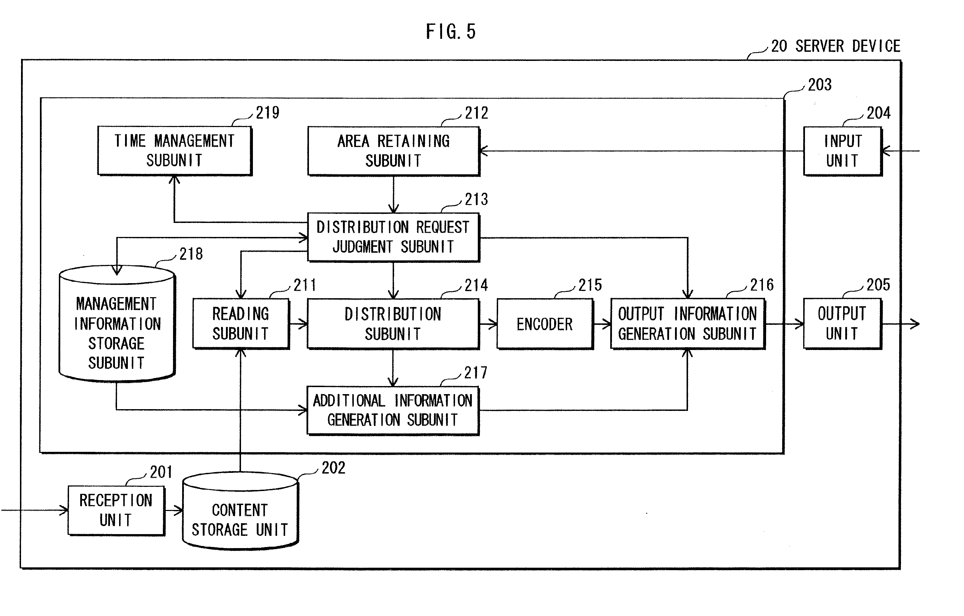

Fig. 5 is a functional block diagram showing a functional structure of the server device 20. As shown in Fig.5, the server device 20 includes a reception unit 201, a content storage unit 202, a distribution control unit 203, an input unit 204, and an output unit 205. The distribution control unit 203 includes a reading subunit 211, an area retaining subunit 212, a distribution request judgment subunit 213, a distribution subunit 214, an encoder 215, an output information generation subunit 216, an additional information generation subunit 217, a management information storage subunit 218, and a time management subunit 219.

The server device 20 is specifically a computer system that includes a microprocessor, a ROM, a RAM, a hard disk unit, a network connection unit, etc., and here is assumed to be a hard disk recorder.

### (1) Reception unit 201

The reception unit 201 includes an antenna and receives, via the antenna, a digital broadcast sent from the broadcast station device 10. The reception unit 201 furthermore extracts content from the received digital broadcast, and writes the extracted content to the content storage unit 202. The content extracted by the reception unit 201 is, for example, the content 100.

### (2) Content storage unit 202

The content storage unit 202 specifically includes a hard disk unit etc., and stores the content received from the reception unit 201 to the hard disk.

### (3) Distribution control unit 203

The distribution control unit 203 controls distribution of the content information according to the CCI and SCI attached to the content. The following describes functions of the constituent elements of the distribution control unit 203.

Upon receiving information specifying the content 100 from the distribution request judgment subunit 213, the reading subunit 211 reads, from the content storage unit 202, the CCI 109 and SCI 108 included in the content 100, and outputs the read CCI 109 and SCI 108 to the distribution request judgment subunit 213. Also, upon receiving, from the distribution request judgment subunit 213, information indicating that distribution can be performed, the reading subunit 211 successively reads, from the content storage unit 202, the content information 110 included in the content 100, and outputs the read content information 110 to the distribution subunit 214.

The area retaining subunit 212 receives, from one of the terminal devices, a playback request to newly view the content 100, as a well as a reservation request to view the content 100 at a later time, and reservation time information indicating a time when the content 100 is to be viewed. Note that the playback request and the reservation request respectively include a terminal device name or IP address that identifies the terminal device and a content name that identifies the content.

The area retaining subunit 212 tentatively retains an area of the requested content 100 from a beginning of the content information 110 to a sixth minute thereof for the terminal device that made the request. The distribution request judgment subunit 213 judges whether the tentatively retaining area can be streamed, and if the judgment is in the affirmative, the area retaining subunit 212 generates distribution management information, and writes the generated distribution management information to the distribution management table. The tentatively retained area is definitively retained when the distribution management information is generated. The retained area cannot be viewed by other terminal devices. The distribution management information and distribution management table are described later.

Also, if the distribution request judgment subunit 213 has judged that the tentatively retained area cannot be streamed, but sends an instruction to the area retaining subunit 212, the area retaining subunit 212 generates distribution management information including playback position information indicated in the instruction, and retains an area of the requested content 100 from a position indicated by the playback position information to a position six minutes thereafter.
The distribution request judgment subunit 213 determines whether the area tentatively retained by the area retaining subunit 212 can be streamed. Specifically, the distribution request judgment subunit 213 receives, from the reading subunit 211, the CCI 109 and SCI 108 included in the content 100, and judges the distributability of the tentatively retained area based on the received CCI 109 and SCI 108, the distribution management table stored by the management information storage subunit 218, and the IP address identifying the terminal device. If the judgment is in the affirmative, the distribution request judgment subunit 213 notifies the reading subunit 211 to such effect. If the judgment is in the negative, the distribution request judgment subunit 213 refers to the distribution management table to determine whether there is a portion that can be streamed. If there is a portion that can be streamed, the distribution request judgment subunit 213 instructs the area retaining subunit 212 to generate distribution management information including playback position information indicating the beginning of the distributable portion. If no distributable portion exists, the distribution request judgment subunit 213 notifies, to the output information generation subunit 216, information indicating that distribution cannot be performed.

Moreover, if the distribution has been scheduled for a later time, the distribution request judgment subunit 213 periodically reads the time managed by the time management subunit 219, and determines whether the read time matches the time indicated by the reservation time information included in the distribution management information. If the judgment is in the affirmative, the distribution request judgment subunit 213 notifies the reading unit 211 that distribution can be performed, and discards the reservation time information of the distribution management information.

Also, upon receiving an operation request indicating a pause from the terminal device via the input unit 204 and the area retaining subunit 212, the distribution request judgment subunit 213 instructs the time management subunit 219 to measure a pause time with use of a timer. Upon receiving, from the time management subunit 219, a notification that the measured pause time has exceeded a first threshold, the distribution request judgment subunit 213 describes information to such effect in the distribution management information stored by the management information storage subunit 218. Upon receiving, from the time management subunit 219, a notification that the measured pause time has exceeded a second threshold, the distribution request judgment subunit 213 discards the distribution management information stored by the management information storage subunit 218.

Also, upon receiving an operation request indicating a stop via the input unit 204 and the area retaining subunit 212, the distribution request judgment subunit 213 instructs the distribution subunit 214 to stop distribution, and discards the distribution management information stored by the management information storage subunit 218.
Note that the area retaining subunit 212 periodically receives playback position information indicating a playback position from the terminal device to which the content information 110 is being streamed. For example, in the present embodiment the playback position information is received once every 30 seconds. Each time the playback position information is received, the area retaining subunit 212 tentatively retains an area, and the distribution request judgment subunit 213 determines whether the tentatively retained area can be streamed and updates the distribution management information (whereby the area is definitively retained). Here, the length of the area to be retained for the terminal device that is currently playing back the content information 110 is an area from three minutes before the position indicated by the playback position information to three minutes after the playback position. Three minutes before and after the playback position is simply one example, and the length of the area to be retained is not limited to this. The length of three minutes before and after the playback position is used here in consideration of the need to fast forward or rewind the content information 110 and the like. Also, an area from the beginning of the content information 110 to six minutes thereafter is initially retained for a terminal device that has started playback processing from the beginning of the content information 110, and after playback by the terminal device proceeds and passes three minutes after the beginning of the content information, the area three minutes before and after the playback position information is retained as mentioned above.
Similarly, each time operation request information indicating fast forwarding, rewinding or the like is received from the terminal currently playing back the content information 110, the area retaining subunit 212 tentatively retains an area, and the distribution request judgment subunit 213 determines whether the tentatively retained area can be streamed and updates the distribution management information (whereby the area is definitively retained).

The distribution subunit 214 outputs the content information 110 that is successively read by the reading subunit 211 to the encoder 215.
The encoder 215 successively receives the content information 110 from the distribution subunit 214, and encodes the received content information 110. The encoder 215 outputs the encoded content information 110 to the output information generation subunit 216.

The output information generation subunit 216 successively receives the encoded content information 110 from the encoder 215, and also receives additional information from the additional information generation subunit 217. The output information generation subunit 216 composites the content information 110 and the additional information to generate output information. The output information generation subunit 216 outputs the generated output information to the terminal device via the output unit 205.
Also, upon receiving, from the distribution request judgment subunit 213, information indicating that distribution cannot be performed, the output information generation subunit 216 generates output information indicating that distribution cannot be performed, and outputs the generated output information to the terminal device via the output unit 205.

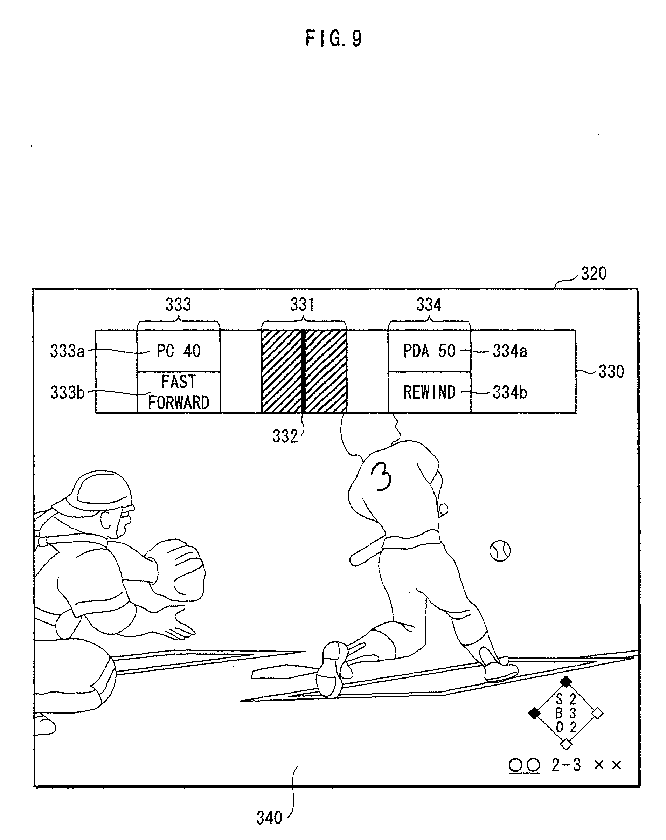

The additional information generation subunit 217 internally prestores additional information control information for generating additional information. The additional information generation subunit 217 generates the additional information by describing necessary information in the additional information control information. Although specifics of the generation processing are described later, the additional information generation subunit 217 basically generates the additional information based on the distribution management table 130 and the terminal device management table 140 stored by the management information storage subunit 218. The generated additional information is displayed by the terminal device on the screen as additional information 330 shown in Fig.9.

The management information storage subunit 218 stores the distribution management table 130 and the terminal device management table 140. The distribution management table 130 includes terminal devices receiving content from the server device 20, and distribution management information generated for each terminal device that has scheduled distribution of the content. The terminal device management table 140 includes terminal device management information including information pertaining to the terminal devices connected to the server device 20.

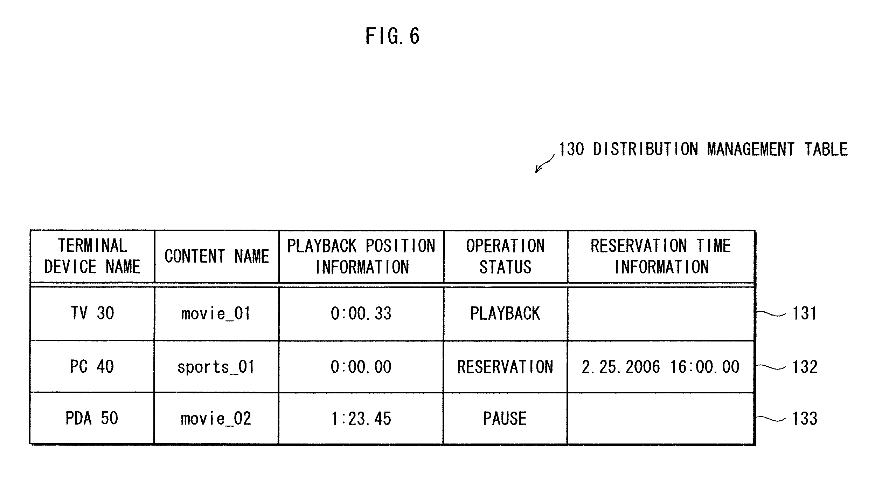

Fig.6 shows a data structure of the distribution management table 130. As shown in Fig. 6, the distribution management table 130 includes distribution management information 131, 132 and 133 that each include a terminal device name, a content name, playback position information, an operation status, and reservation time information. The distribution management information 131, 132 and 133 is generated and updated by the area retaining subunit 212.
Here, the operation statuses, which indicate the operation status of each of the terminals, are received by the server device 20 from each of the terminal devices as operation request information, and in the present embodiment is set to "playback", "reservation", "fast forward", "rewind", or "pause". Note that if the operation status is set to "pause", a flag is set in the operation status field by the distribution request judgment subunit 213 if the pause time exceeds the first threshold held by the time management subunit 219. The flag enables identifying that the pause time has exceeded the first threshold.

The distribution management information 131 indicates that the TV 30 is currently playing back a content with the content name "movie_01" at the position "00 hr 00 min 33 sec". The distribution management information 132 indicates that the PC 40 has scheduled the playback of a content with the content name "sports_01" from the position "00 hr 00 min 00 sec" at "16 hr 00 min 00 sec, 25 February, 2006". The distribution management information 133 indicates that the PDA 50 has "paused" the playback of a content with the content name "movie_02" at the position "1 hr 23 min 45 sec".

Note that the distribution management table 130 shown in Fig.6 is simply an example, and the distribution management information is updated or deleted each time there is a change in the distribution status of the content information being streamed by the server device 20.

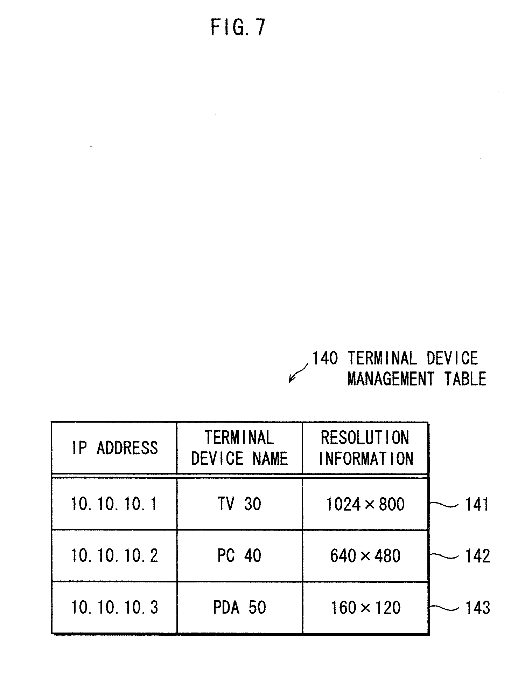

Fig.7 shows a data structure of the terminal device management table 140. As shown in Fig. 7, the terminal device management table 140 includes terminal device management information 141, 142 and 143 that each include an IP address, a terminal device name and resolution information. Note that the terminal device management information is not limited to this, but instead may describe installation locations of the terminal devices, such as "living room", "kitchen" and "child's room".

The terminal device management information 141 indicates that the IP address of the TV 30 is "10.10.10.1", and that the resolution of a display unit 308 is "1024×800". The terminal device management information 142 indicates that the IP address of the PC 40 is "10.10.10.2", and that the resolution of the display unit included therein is "640x480". The terminal device management information 143 indicates that the IP address of the PDA 50 is "10.10.10.3", and that the resolution of the display unit included therein is "160x120".

The time management subunit 219 has a clock for managing the time, and a timer for measuring a pause time. Also, the time management subunit 219 internally prestores the first threshold and the second threshold. The time management subunit 219 receives an instruction from the distribution request judgment subunit 213, begins measuring the pause time with use of the timer, and thereafter periodically (e.g., once every second), determines whether the pause time measured by the timer has exceeded the first threshold. When the pause time exceeds the first threshold, the time management subunit 219 notifies the distribution request judgment subunit 213 to such effect. Similarly, when the pause time exceeds the second threshold, the time management subunit 219 notifies the distribution request judgment subunit 213 to such effect, and stops measuring the pause time with use of the timer.

### (4) Input unit 204

The input unit 204 receives an input of operation request information from the TV 30, the PC 40 and the PDA 50, and outputs the received operation request information to the area retaining subunit 213. Here, the operation request information received from a terminal device by the input unit 204 is information requesting new playback of content, information requesting new scheduling of content, information requesting fast forwarding, rewinding, pausing, or stopping of content being played back, and the like.

Also, every 30 seconds, the input unit 204 receives playback position information indicating a playback position from a terminal device that is currently playing back content, and outputs the received playback position information to the area retaining subunit 212.

### (5) Output unit 205

The output unit 205 successively receives the output information from the output information generation subunit 216, and outputs the received output information to the terminal devices.

### 4. Structure of the TV 30

The following describes a structure of the TV 30, which is an exemplary terminal device.

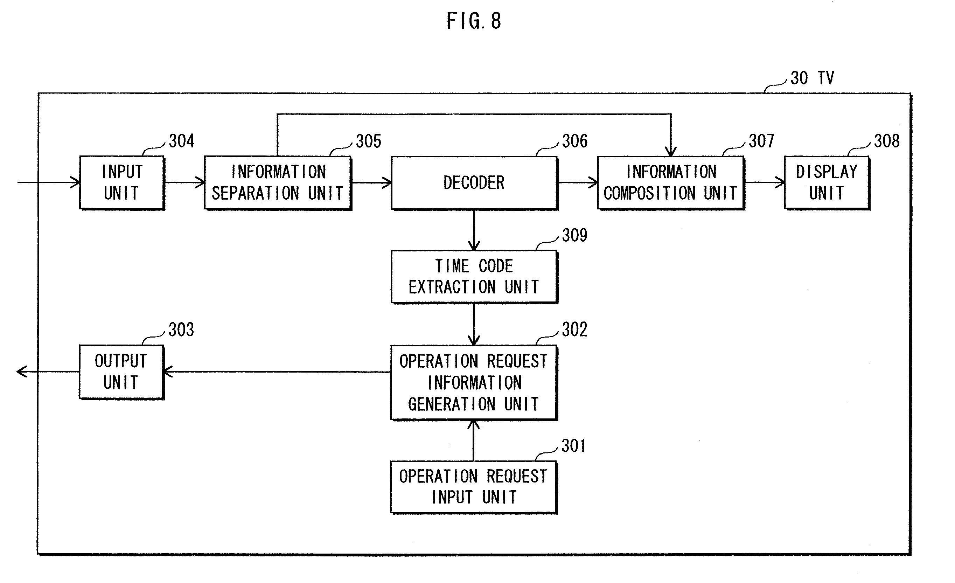

Fig.8 is a functional block diagram showing a functional structure of the TV 30. As shown in Fig.8, the TV 30 includes an operation request input unit 301, an operation request information generation unit 302, an output unit 303, an input unit 304, an information separation unit 305, a decoder 306, an information composition unit 307, the display unit 308, and a time code extraction unit 309.

### (1) Operation request input unit 301

The operation request input unit 301 receives, from a user, a playback request for content stored in the server device 20, a reservation request, a special playback request for content being played back, a pause request, a stop request, and the like. Note that the special playback request refers to fast forwarding and rewinding. The operation request input unit 301 outputs the received operation request to the operation request information generation unit 302. Note that the operation request input unit 301 is realized by specifically a keyboard, a mouse, a track pad, or the like.

### (2) Operation request information generation unit 302

The operation request information generation unit 302 receives the playback request, the reservation request or the stop request from the operation request input unit 301, and generates, according to the received request, operation request information to be transmitted to the server device 20. The operation request information generation unit 302 outputs the generated operation request information to the output unit 303.

Also, if the special playback request or the pause request is received from the operation request input unit 301, the operation request information generation unit 302 similarly generates operation request information according to the received request, as well as reads a time code indicating a playback position from the time code extraction unit 309, and outputs, to the output unit 303, the read time code as the playback position information in addition to the operation request information.

Furthermore, the operation request information generation unit 302 reads a time code from the time code extraction unit 309 once every 30 seconds during playback of content information, and outputs the read time code to the output unit 303 as the playback position information.

### (3) Output unit 303

The output unit 303 receives the operation request information and the playback position information from the operation request information generation unit 302, and transmits the received operation request information and playback position information to the server device 20.

### (4) Input unit 304

The input unit 304 receives the output information transmitted from the server device 20 according to the operation request information transmitted therefrom, and outputs the received output information to the information separation unit 305. Here, the output information includes content information, which is video data, and the additional information generated by the additional information generation subunit 217 of the server device 20.

### (5) Information separation unit 305

The information separation unit 305 receives the output information from the input unit 304, and separates the received output information into the content information and the additional information. The information separation unit 305 successively outputs the content information to the decoder 306, and outputs the additional information to the information composition unit 307.

### (6) Decoder 306

The decoder 306 successively decodes the content information received from the information separation unit 305 to generate image information. The generated image information is successively output to the information composition unit 307. Here, the decoding method used by the decoder 306 corresponds to the encoding method used by the encoder 215 of the server device 20.

### (7) Information composition unit 307

The information composition unit 307 receives the additional information from the information separation unit 305, and furthermore successively receives the image information generated by the decoder 306. The information composition unit 307 composites the image information and the additional information to generate screen information. The information composition unit 307 outputs the generated screen information to the display unit 308.

### (8) Display unit 308

The display unit 308 is realized by specifically a PDP (Plasma Display Panel), an LCD, an EL display, or the like, and upon receiving the screen information from the information composition unit 307, displays the received screen information on the display.
Fig.9 shows screen information 320 displayed by the display unit 308 as a specific example of the screen information. As shown in Fig.9, the screen information 320 is displayed on the screen as a composition of the additional information 330 and the image information 340.

The additional information 330 includes information pertaining to the content information being played back by the terminal device. Specifically, the left end and right end of the additional information are the start time and end time of the content information respectively, the area retained by the terminal device is displayed in a hatched area 331, and the position being played back by the terminal device is displayed by a bar 332 included in the area 331.
Furthermore, an area 333 and an area 334 show areas retained by other terminal devices. Here, the area 333 includes a terminal device name area 333a and an operation status area 333b, and the area 334 similarly includes a terminal device name area 334a and an operation status area 334b.

The terminal device name area 333a of the area 333 includes the information "PC 40", which indicates that the PC 40 is retaining the thus displayed area of the content information, and the operation status area 333b includes the information "fast forward", which indicates that the PC 40 is performing a fast forward operation. The terminal device name area 334a of the area 334 includes the information "PDA 50", which indicates that the PDA 50 is retaining the thus displayed area of the content information, and the operation status area 334b includes the information "rewind", which indicates that the PDA 50 is performing a rewind operation.

### (9) Time code extraction unit 309

While the content information is being decoded by the decoder, the time code extraction unit 309 extracts a time code from the content information, and internally holds the extracted time code. The extracted time code is read by the operation request information generation unit 302, and transmitted to the server device 20 as the playback position information.

Note that descriptions of the PC 40 and the PDA 50 have been omitted since structures thereof are similar to the TV 30.

### Operations

### 1. Operations of the information distribution system 1

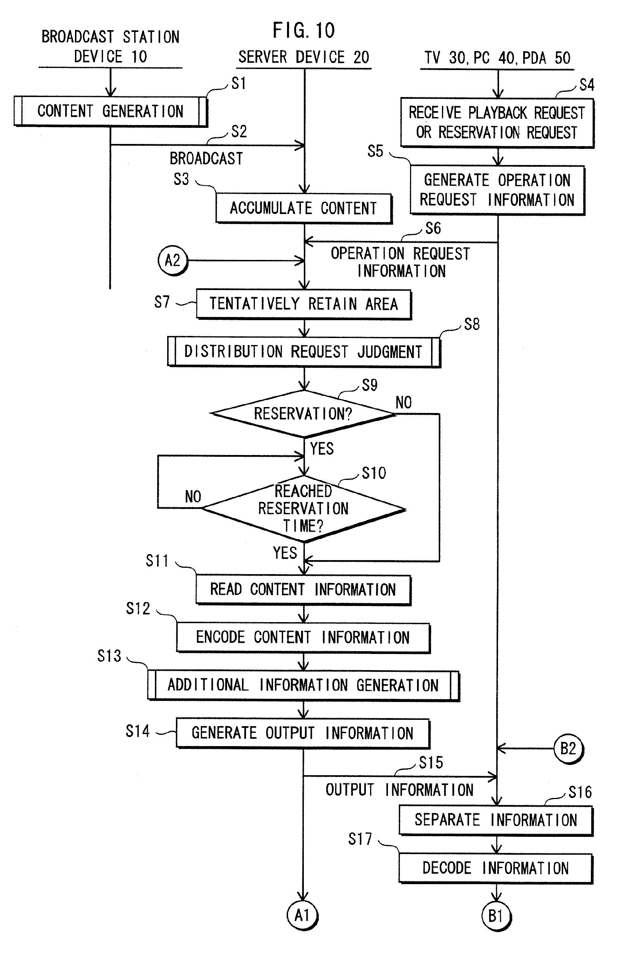

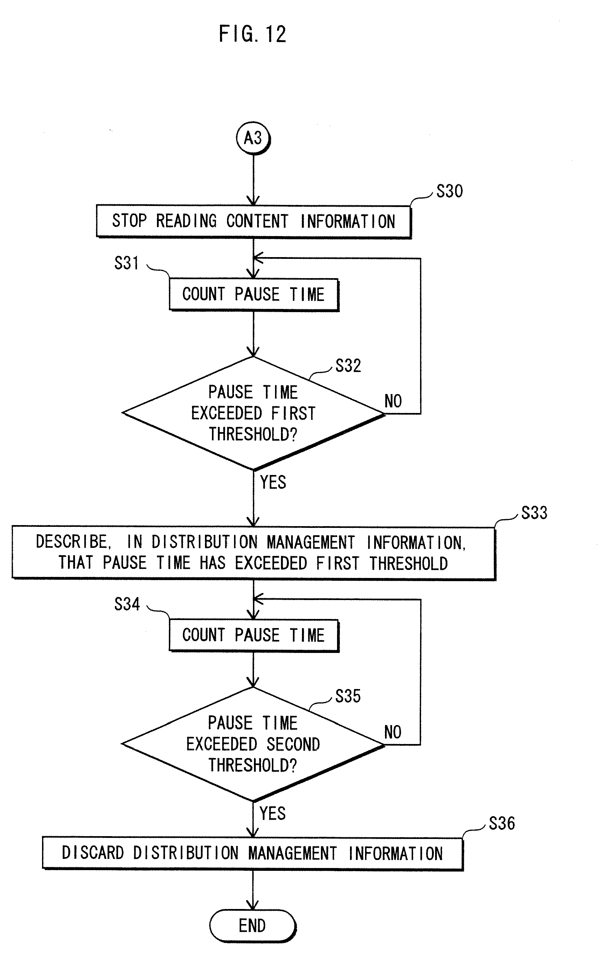

First is a description of overall operations performed by the information distribution system 1. Fig. 10, Fig. 11 and Fig. 12 are flowcharts showing operations of the information distribution system 1. Note that operations of the TV 30, the PC 40 and the PDA 50 are described using the TV 30 as a specific example.

The broadcast station device 10 generates content (step S1). The broadcast station 10 broadcasts the generated content over digital broadcast waves (step S2), and the server device 20 receives the digital broadcast waves (step S2). The server device 20 extracts the content from the digital broadcast waves, and stores the extracted content in the content storage unit 202 (step S3).
The operation request input unit 301 of the TV 30 receives a playback request or a reservation request for the content (step S4). The operation request information generation unit 302 generates operation request information based on the operation request received in step S4 (step S5). The output unit 303 transmits the operation request information to the server device 20, and the input unit 204 of the server device 20 receives the operation request information (step S6).

The area retaining subunit 212 tentatively retains an area of the requested content from a beginning thereof to six minutes thereafter (step S7). Next, the distribution request judgment subunit 213 performs distribution request judgment (step S8). Details of the distribution request judgment processing are described later. If the operation request information received in step S6 indicates a playback request (step S9:NO), processing proceeds to step S11 and continues therefrom.

If the operation request information received in step S6 indicates a reservation request (step S9:YES), the distribution request judgment subunit 213 judges whether the current time and the reservation time match (step S10). If the current time and the reservation time do not match (step S10:NO), the processing of step S10 continues to be performed by the distribution request judgment subunit 213 in parallel with other processing in the server device 20. If the current time and the reservation match (step S10:YES), processing proceeds to step S11.

Next, the distribution request judgment subunit 213 instructs the reading subunit 211 to read the content information, and the reading subunit 211 reads the content information from the content storage unit 202 (step S11).
The reading subunit 211 outputs the content information to the encoder 215 via the distribution subunit 214. The encoder 215 successively encodes the content information received from the distribution subunit 214 (step S12).

Also, the additional information generation subunit 217 generates additional information based on the distribution management table and terminal device management table 140 stored by the management information storage subunit 218 (step S13). The output information generation subunit 216 receives the encoded content information from the encoder 215, and receives the additional information from the additional information generation subunit 217. The output information generation subunit 216 generates output information from the encoded content information and the additional information (step S14). The output unit 205 transmits the output information generated by the output information generation subunit 216, and the input unit 304 of the TV 30 receives the output information (step S15).

The input unit 304 transfers the received output information to the information separation unit 305, which separates the output information into the content information and the additional information (step S16). The information separation unit 305 outputs the content information to the decoder 306, and outputs the additional information to the information composition unit 307. Next, the decoder 306 decodes the content information received from the information separation unit 305 (step S17) to generate image information. The generated image information is output to the information composition unit 307.
The information composition unit 307 composites the additional information and the image information received from the decoder 306 (step S18) to generate screen information. The information composition unit 307 outputs the generated screen information to the display unit 308, which displays the received screen information (step S19).

The content information is streamed from the server device 20 to the TV 30, and every 30 seconds after playback of the content information by the TV 30 begins, the operation request information generation unit 302 reads a time code from the time code extraction unit 309, and generates playback position information using the read time code as the playback position (step S20). The output unit 303 transmits the playback position information generated by the operation request information generation unit 302 to the server device 20, and the input unit 204 of the server device 20 receives the playback position information (step S21). In other words, the processing of steps S20 and S21 are performed once every 30 seconds while the TV 30 is playing back the same content information. Also, the server device 20 that received the playback position information performs distribution request judgment similar to step S8.

Next, if a special playback request, pause request or stop request has not be received in the TV 30 (step S22:NO), processing returns to step S15, the output information transmitted from the server device 20 is successively received, and playback processing of the content information continues. At this time, the server device 20 also repeatedly performs the processing of steps S11 to S15.

If the operation request input unit 301 has received a special playback request, a pause request or a stop request for content information currently being played back (step S22:YES), the operation request information generation unit 302 generates operation request information according to the received request (step S23), and furthermore reads a time code from the time code extraction unit 309. The operation request information generation unit 302 sets the read time code to the playback position information, and outputs the playback position information to the output unit 303 along with the operation request information. The output unit 303 transmits the operation request information and playback position information to the server device 20, and the input unit 204 of the server device 20 receives the operation request information and playback position information (step S24).

Note that as previously mentioned, the server device 20 continues to distribute the content information to the TV 30 (steps S11 to S15) if operation request information such as special playback processing is not received in step S24.
If the operation request information received in step S24 is a stop request (step S25:YES), the reading subunit 211 stops reading the content information (step S26), and the distribution request judgment subunit 213 discards distribution management information pertaining to the TV 30 from the distribution management table stored by the management information storage subunit 218 (step S27).

If the operation request information received in step S24 indicates a special playback request, that is, a fast forward or a rewind (step S28:YES), fast forward or rewind processing is performed (step S29). Specifically, the distribution request judgment subunit 213 instructs the reading subunit 211 to read the content information for streaming the fast forwarded or rewound content, and describes "fast forward" or "rewind" in the operation status field of the distribution management information pertaining to the TV 30 in the management information storage subunit 218. Thereafter, the server device 20 returns to step S7, and tentatively retains an area and performs distribution request judgment processing based on the playback position information received in step S24.

If the operation request information received in step S24 is neither a stop request nor a special playback request, it is a pause request. At this time, the reading subunit 211 stops reading the content information (step S30), and the distribution request judgment subunit 213 describes "pause" in the operation status field of the distribution management information pertaining to the TV 30, and instructs the time management subunit 219 to measure a pause time with use of the timer. The time management subunit 219 measures the pause time with use of the timer (step S31).

The time management subunit 219 compares the measured pause time and the first threshold, and if the pause time is less than or equal to the first threshold (step S32:NO), returns to step S31 and continues measuring the pause time. If the pause time has exceeded the first threshold (step S32:YES), the distribution request judgment subunit 213 indicates in the operation status field of the distribution management information pertaining to the TV 30 that the first threshold has been exceeded (step S33).

Thereafter, the time management subunit 219 continues measuring the pause time with use of the timer (step S34), and compares the measured pause time and the second threshold. If the pause time is less than or equal to the second threshold (step S35:NO), the time management subunit 219 returns to step S34 and continues measuring the pause time. If the pause time has exceeded the second threshold (step S35:YES), the distribution request judgment subunit 213 discards the distribution management information pertaining to the TV 30 (step S36).

### 2. Operations of content generation processing

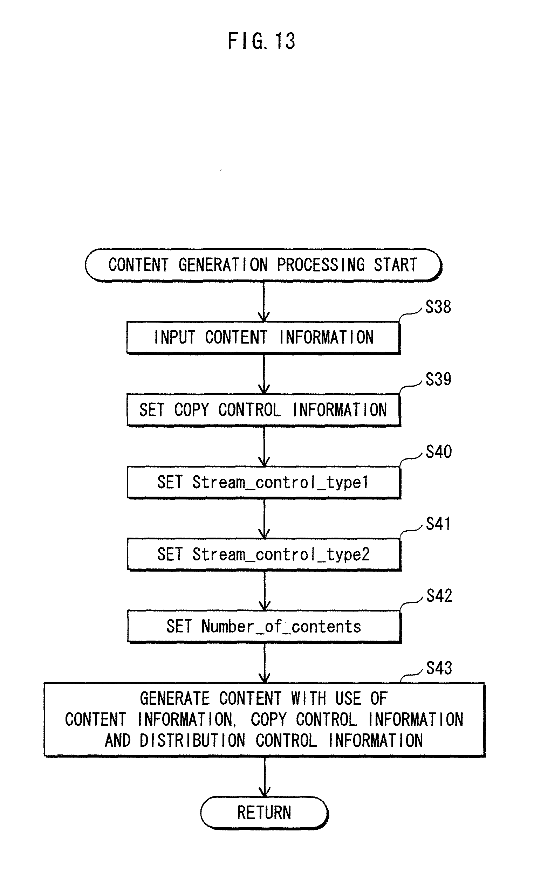

The following describes operations of content generation processing performed by the broadcast station device 10. Fig. 13 is a flowchart showing operations of content generation processing. Note that operations shown here are details of step S1 of Fig. 10.
First, the content information input unit 101 receives an input of content information, which is video content (step S38). Next, the copy control information setting unit 103 sets the CCI according to the CCI setting information received from the input unit 102 (step S39). Then, the distribution control information setting unit 104 sets the bit pattern of Stream_control_type1 according to the SCI setting information received from the input unit 102 (step S40). Then, the distribution control information setting unit 104 sets the bit pattern of Stream_control_type2 (step S41). Lastly, if the bit pattern of Stream_control_type2 set in step S41 is "10", the value of Number_of_contents is set (step S42), and the SCI is generated.

The content generation unit 105 generates content with use of the content information, the CCI and the SCI (step S43).

### 3. Operations of distribution request judgment processing

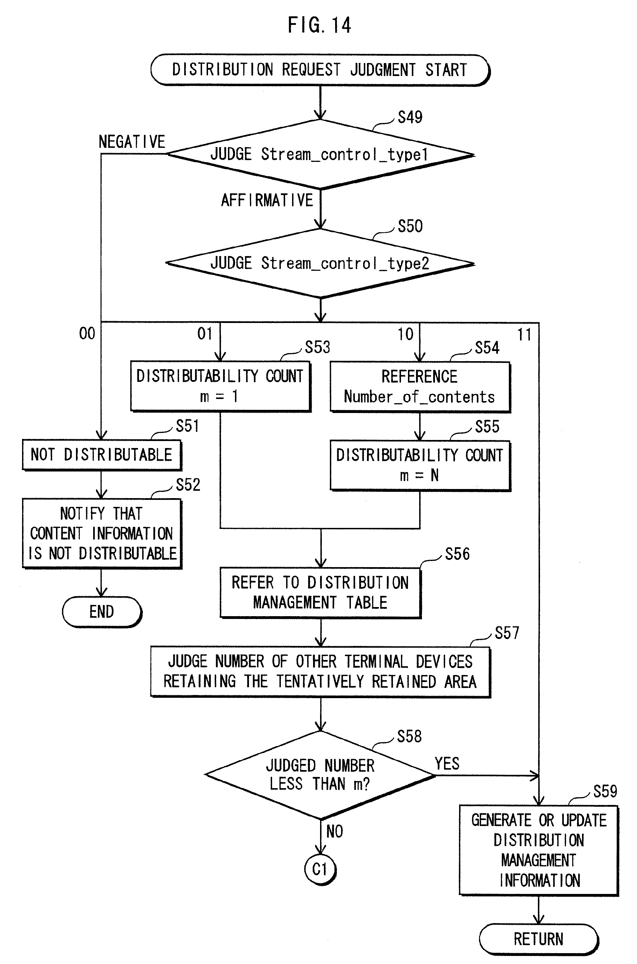

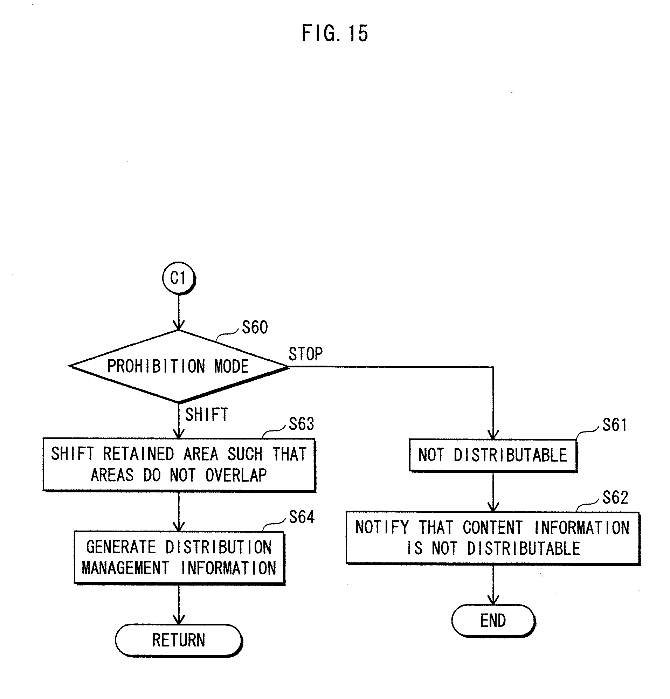

The following describes operations of distribution request judgment processing performed by the server device 20. Fig. 14 and Fig.15 are flowcharts showing operations of distribution request judgment processing. The operations shown in Fig.14 and Fig.15 are details of step S8 of Fig. 10.

The distribution request judgment subunit 213 reads the SCI included in the content pertaining to the playback request or reservation request, and first judges Stream_control_type1 (step S49). Specifically, the distribution request judgment subunit 213 reads the bit pattern of Stream_control_typel, and judges the range in which the requested content can be streamed. The distribution request judgment subunit 213 also reads the IP address of the TV 30 from the terminal device management information 141 pertaining to the TV 30, which is stored by the management information storage subunit 218. The distribution request judgment subunit 213 judges whether the TV 30 exists in the range of distributability indicated by Stream_control_type1.

If the TV 30 does not exist in the range of distributability (step S49:NEGATIVE), processing proceeds to step S51. If the TV 30 exists in the range of distributability (step S24:AFFIRMATIVE), the distribution request judgment subunit 213 judges Stream_control_type2 (step S50). If Stream_control_type2 is set to "00" (step S50:00), the distribution request judgment subunit 213 judges that the content information cannot be streamed (step S51), and notifies the TV 30 to such effect (step S52).

If Stream_control_type2 is set to "01" (step S50:01), the distribution request judgment subunit 213 sets a distributability count m to 1 (step S53), and proceeds to step S56. If Stream_control_type2 is set to "10" (step S50:10), the distribution request judgment subunit 213 references Number_of_contents (step S54), sets the value indicated by Number_of_contents to N, and sets the distributability count m to N (step S55).

Next, the distribution request judgment subunit 213 refers to the distribution management table (step S56), and judges the number of other terminal devices that are retaining the same area as was tentatively retained in step S7 (step S57). Here, a terminal device is not counted as retaining the same area if "pause" is indicated in the operation status field of the corresponding distribution management information and a flag has been set to indicate that the pause time has exceeded the first threshold.

If the number of other terminal devices retaining the same area as the area tentatively retained in step S7 is less than m (step s58:YES), processing proceeds to step S59. If greater than or equal to m (step S58:NO), the distribution request judgment subunit 213 reads a prohibition mode.
The prohibition mode is information that determines processing in a case of distribution of the tentatively retained area being prohibited due to a violation of the SCI, and is set to either "move" or "stop". The prohibition mode may be stored in advance in the distribution request judgment subunit 213 and used in common for all of the terminal devices, or may be modes differing according to the terminal device and described in the distribution management information for each of the terminal devices.

The distribution request judgment subunit 213 judges the read prohibition mode (step S60), and if the prohibition mode indicates "stop" (step S60:STOP), judges that the content information cannot be streamed (step S61), and notifies the TV 30 to such effect (step S62). If the prohibition mode indicates "shift" (step S60:SHIFT), the distribution request judgment subunit 213 shifts the area to be retained by the TV 30 from the area tentatively retained in step S7, such that the area is not duplicated the same or more number of times as m (step S63). Next, the distribution request judgment subunit 213 instructs the area retaining subunit 212 to retain the shifted area, and the area retaining subunit 212 generates or updates the distribution management information (step S64).

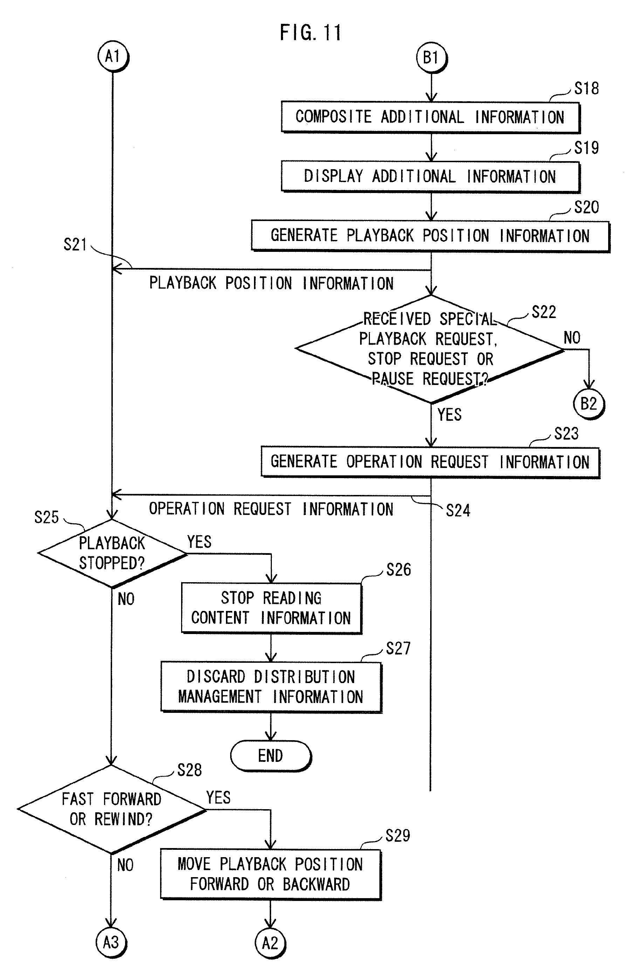

If Stream_control_type2 is set to "11" (step S50 : 11), the distribution request judgment subunit 213 judges that the content information can be streamed, and instructs the area retaining subunit 212 to retain the tentatively retained area, after which the area retaining subunit 212 generates or updates the distribution management information (step S59).
Note that the server device 20 performs the tentative retaining processing of step S7 in Fig.10 and the distribution request judgment processing shown in Fig. 14 and Fig. 15 not only when a playback request or reservation request is received in step S6, but also each time playback position information is received from the TV 30 (in the present embodiment, once every 30 seconds) in step S21 of Fig. 11.

### 4. Operations of additional information generation processing

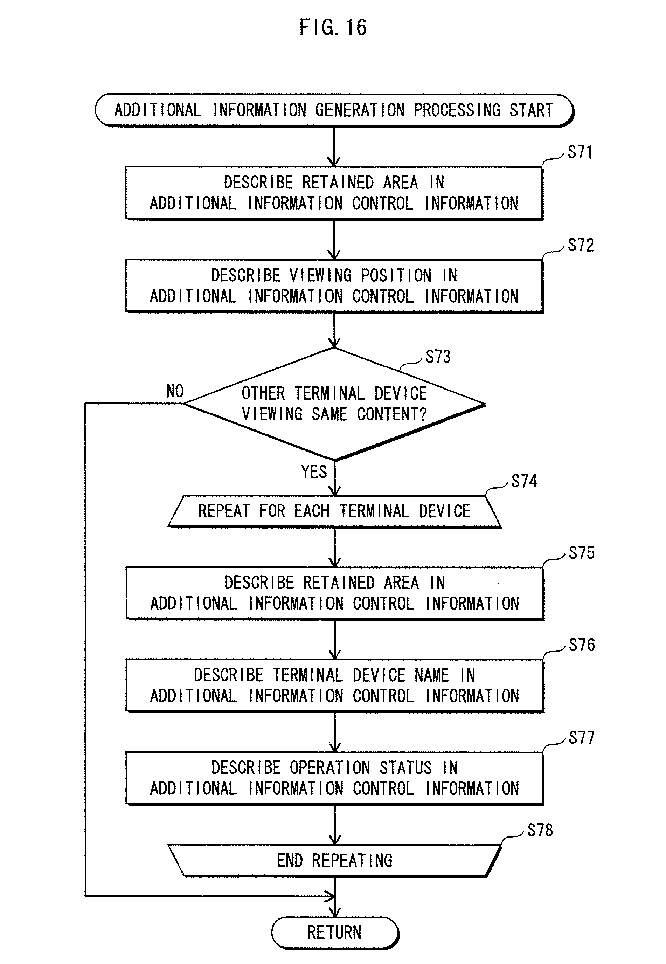

The following describes operations of additional information generation processing performed by the server device 20. Fig.16 is a flowchart showing operations of additional information generation processing. The operations shown in Fig.16 are details of step S13 in Fig.10.
The additional information generation subunit 217 reads the distribution management information pertaining to the TV 30 from the distribution management table of the management information storage subunit 218, and sets, in the additional information control information, the area three minutes before and after the position indicated by the playback position information as the area retained by the TV 30 (step S71). The additional information generation subunit 217 then sets the position indicated by the playback position information as the viewing position in the additional information control information (step S72).

Next, the additional information generation subunit 217 refers to the distribution management table, and judges whether other terminal devices are viewing the same content information (step S73). If no other terminal devices are viewing the same content information (step S73:NO), the additional information generation subunit 217 outputs, to the output information generation subunit 216, additional information including the area retained by the TV 30 and the viewing position of the TV 30.

If any other terminal device is viewing the same content information (step S73:YES), step S75 to S77 are repeated for each of the other terminal devices viewing the same content information (step S74). First, the additional information generation subunit 217 describes the areas retained by the other terminal devices in the additional information control information (step S75). Next, the additional information generation subunit 217 describes the terminal device names (step S76) and the operation statuses (step S77) in the additional information control information. After the processing from steps S75 to S77 has finished for all of the other terminal devices viewing the same content information, the additional information generation subunit 217 stops the repeated processing (step S78), and outputs the generated additional information to the output information generation subunit 216.

### 5. Operations of performing playback control to avoid duplication

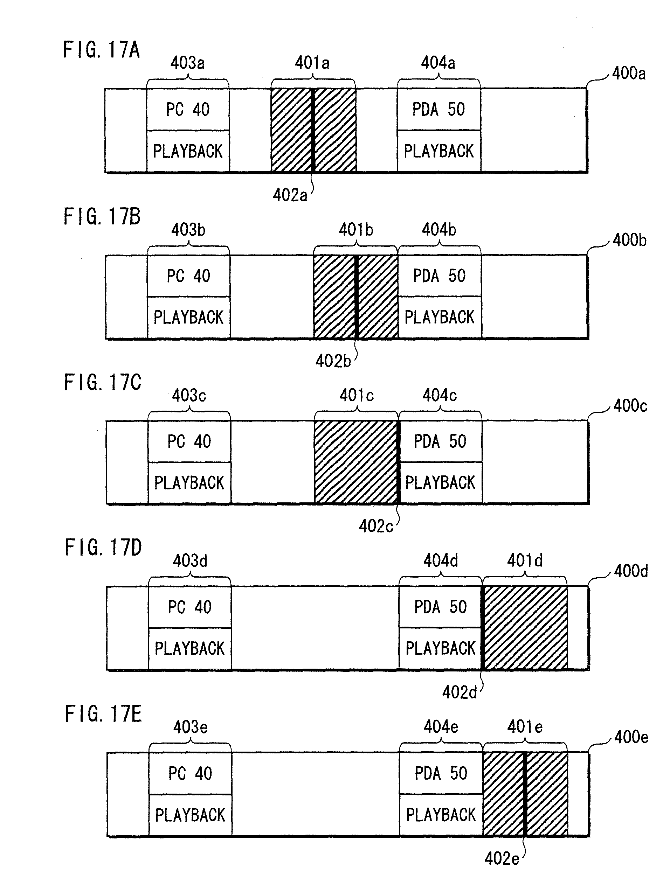

The following describes details of step S60, that is to say, control performed by the distribution request judgment subunit 213, in the case of the same content information being streamed to two or more terminal devices, such that an area is not duplicated on more terminal devices than the distributability count indicated by the SCI, with reference to Figs.17A to 17E.

The following description is an exemplary case in which the TV 30 is viewing content information whose Stream_control_type2 is set to "01". Note that for the sake of simplicity, the following description uses the additional information displayed on the display unit 308 of the TV 30.
First, as shown in Fig.17A, the TV 30 has retained an area 401a and is viewing the content information at the position indicated by a bar 402a. Here, the PC 40 has retained an area 403a of the same content information, and the PDA 50 has retained an area 404a of the same content information.

Next, when the TV 30 transmits operation request information indicating a fast forward to the server device 20, the latest position of an area 401b retained by the TV 30 matches the earliest position of an area 404b retained by the PDA 50, as shown in Fig.17B. Here, the distribution request judgment subunit 213 of the server device 20 causes the area retaining subunit 212 to temporarily stop retaining an area of the content information.

Thereafter, as fast forwarding is performed by the TV 30, a bar 402c indicating the viewing position of the TV 30 arrives at a latest position of an area 401c retained by the TV 30, as shown in Fig. 17C. Given that Stream_control_type2 of the content information is set to "01", the viewing position of the TV 30 is prohibited from overlapping an area 404c retained by the PDA 50.

Accordingly, the distribution request judgment subunit 213 instructs the area retaining subunit 212 to retain an area for the TV 30 that does not overlap an area 404d retained by the PDA 50, and the area retaining subunit 212 retains an area 401d for the TV 30, as shown in Fig. 17D. In this case, a bar 402d indicating the viewing position of the TV 30 is located at an earliest position of the area 401d.
When a bar 402e indicating the viewing position of the TV 30 arives at a center of an area 401e, as shown in Fig. 17E, the area retaining subunit 212 again begins retaining an area of the content information.

### Variations

(1) Although the SCI is attached to the content information by the broadcast station device 10 in the above embodiment, this is not essential to the present invention. The server device 20 may attach the SCI to the content information. For example, if a user stores self-created content in the server device 20, the user himself can set the SCI.

(2) It is described with reference to Figs. 17A to 17D in the above embodiment that in a case of overlapping retained areas, the terminal device that first retained the area is given priority (in Figs. 17A to 17E, the retaining of an area for the PDA 50 is given priority over the TV 30). However, this is not essential to the present invention. For example, a priority order may be set in advance for the terminal devices, and processing in the case of overlapping areas may be performed according to the priority order. The priority order may be described in the terminal device management table 140 stored by the management information storage subunit 218 of the server device 20.

For example, assuming that the TV 30 has been set higher in the priority order than the PDA 50, in the case of Fig. 17C in which the area 401c retained by the TV 30 overlaps with the area 404c retained by the PDA 50, the TV 30 can continue to view the content information, and the area retained by the PDA 50 is shifted ahead of the area retained by the TV 30.

(3) Although the content information is, for example, a single movie, and a single SCI piece is attached to the content information in the above embodiment, the present invention may have a structure in which different SCI is set for different portions of the content information.
More specifically, the broadcast station device 10 sets an SCI piece for each partial content piece of the content information, and generates a list of offsets and the SCI pieces. The broadcast station device 10 broadcasts the content information and the generated list, and the server device 20 receives the content information and the list. Thereafter, the server device 20 may, in accordance with the received list, perform distribution request judgment according to the SCI pieces set for the partial content pieces.

The SCI in the present invention may be information that indicates whether content information can be streamed, according to an attribute of a terminal device.
For example, in a system including terminal devices that can accumulate content information and terminal devices that cannot accumulate content information, the attribute can be whether the terminal device has an accumulation function. Here, the SCI may be set so as to prohibit the distribution of content information to the terminal devices that have an accumulation function, and permit the distribution of content information to the terminal devices that do not have an accumulation function.

The terminal devices may transmit the above attribute to the server device 20 along with a playback request, a reservation request, or playback position information. The server device 20 may prohibit distribution of the content information if the attribute received from the terminal device indicates "has accumulation function", and permit distribution of the content information if the attribute indicates "no accumulation function".
(5) In the above embodiment, when the pause time exceeds the preset first threshold, the area retained by the terminal device up to that point is no longer retained. If a playback request is received from another terminal device, priority is given to the area retained by the other terminal device. Although this scheme is realized by setting the flag in the operation status field of the distribution management information, control using the flag is not essential to the present invention. For example, control may be performed such that when a pause request is received from a terminal device, the area retained by the terminal device that made the pause request gradually narrows in proportion to a stop time.

Also, the present invention may have a structure in which the pause processing in the above embodiment is performed only if Stream_control_type2 of the content is set to "01".
(6) The present invention is not limited to the area retained by the terminal devices being three minutes before and after a playback position. Also, the retained area need not be fixed. For example, the area to be retained may be determined according to operation request information received from the terminal device.

For example, the retained area may be set to three minutes before and after the playback position if the terminal device is performing normal playback processing, and the retained area may be set to five minutes before and after the playback position if the terminal device is performing special playback processing such as fast forwarding, rewinding, or the like.
(7) The present invention may be realized as methods for performing the above-described functions. Also, the present invention may be realized as a computer program for causing a computer to operate by the methods. Also, the present invention may be realized as digital signals representing the computer program.

The present invention may be realized as a computer-readable recording medium (for example, a flexible disk, a hard disk, CD-ROM, MO, DVD, DVD-ROM, DVD-RAM, BD (Blue-ray Disc), or a semiconductor memory) containing the above computer program or digital signals recorded thereon. Also, the present invention may be realized as the computer program or the digital signals recorded on the computer-readable recording medium.

The computer program or the digital signals as the present invention may be transferred via telecommunication lines, radio communications, communication lines, or a network such as the internet.
The present invention may be realized as a computer system including a CPU and a memory, where the memory stores the computer program, and the CPU operates in accordance with the computer program.

Also, the computer program or the digital signals as the present invention may be transferred to another computer system by means of the computer-readable recording medium recording them or the network or the like so that the other computer system can operate in the same manner.
(8) The present invention also includes a case in which a portion or all of the function blocks of the broadcast station device 10 and the server device 20 in the above embodiment are realized by an LSI, which is an integrated circuit. The function blocks may each be made into a single and separate chip, or may be made into a single chip including a portion or all portions thereof. The LSI referred to here is also called an IC, a system LSI, a super LSI, or an ultra LSI depending on the degree of integration.

Also, the integration is not limited to LSI implementation, but instead may be realized by a dedicated circuit. After LSI manufacture, the use of a field programmable gate array (FPGA) or a silicon flexible processor in which the connection and settings of circuit cells in the LSI can be restructured is possible.
Furthermore, if integration technology is developed that replaces LSIs due to progressive or derivative semiconductor technology, integration of functional blocks using this technology is naturally possible. For example, the application of biotechnology is a possibility.

(9) The present invention also includes combinations of the above embodiment and the above variations.

### INDUSTRIAL APPLICABILITY

The present invention is useful as a mechanism for protecting rights of a content holder in an industry that distributes digital content such as audio and video to a home server or the like via a digital broadcast network, the Internet, etc.

## Claims

1. An information distribution device that is connected to a plurality of terminal devices and controls streaming of a content to the plurality of terminal devices, the information distribution device comprising:
a hold unit operable to hold the content and distribution control information that indicates a maximum number of the terminal devices to which a same portion of the content can be streamed; and
a distribution control unit operable to prohibit simultaneous streaming of the same portion of the content to a greater number of the terminal devices than the maximum number indicated by the distribution control information.

2. The information distribution device of claim 1, wherein
the distribution control unit permits simultaneous streaming of the same portion of the content to a same or smaller number of the terminal devices than the maximum number indicated by the distribution control information, and permits simultaneous streaming of differing portions of the content to an unlimited number of the terminal devices.

3. The information distribution device of claim 2, wherein the distribution control unit includes
a management subunit operable to, when the content is being streamed, manage a distribution position information piece indicating a content portion being streamed to one or more of the terminal devices;
a reception subunit operable to receive, from one of the terminal devices, request position information indicating a portion of the content requested for playback; and
a judgment subunit operable to judge, with use of the distribution position information piece and the request position information, that the requested portion cannot be streamed if a number of the terminal devices to which the requested portion is being streamed exceeds the maximum number indicated by the distribution control information, and that the requested portion can be streamed if the number of terminal devices to which the requested portion is being streamed is less than or equal to the maximum number indicated by the distribution control information, and
the distribution control unit prohibits streaming of the requested portion of the content to the one of the terminal devices if the judgment subunit has judged that the requested portion cannot be streamed.

4. The information distribution device of claim 3, wherein the management subunit includes
a generation part operable to, if streaming of the requested portion of the content to the one of the terminal devices has been permitted according to the judgment of the judgment subunit, generate a new distribution position information piece indicating the requested portion of the content; and
an update part operable to, when the content is being streamed, periodically acquire a playback position from the one or more terminal devices to which the content is being streamed, and update the distribution position information pieces according to the acquired playback position.

5. The information distribution device of claim 4, wherein
if the judgment subunit has judged that the requested portion cannot be streamed, the distribution control unit selects, according to the distribution position information piece managed by the management subunit, a portion of the content that is being streamed to a smaller number of the terminal devices than the maximum number indicated by the distribution control information, and permits streaming of the selected portion to the one of the terminal devices.

6. The information distribution device of claim 4, wherein
upon the reception subunit receiving, from the one of the terminal devices to which the content is not being streamed, the request position information indicating the requested portion of the content and time information indicating a time at which the requested portion is to be played back, the management subunit further generates the new distribution position information piece that includes the time information, and
upon a current time reaching the time indicated by the time information, the distribution control unit permits streaming of the portion of the content indicated by the new distribution position information piece to the one of the terminal devices.

7. The information distribution device of claim 4, wherein
upon reception of a pause request from the one or more terminal devices to which the content is being streamed, the management subunit measures a pause time,
upon the pause time exceeding a predetermined time, the management subunit adds, to the corresponding distribution position information piece, information indicating that the pause time has exceeded the predetermined time, and
the judgment subunit performs the judgment without use of the corresponding distribution position information piece that has added thereto the information indicating that the pause time has exceeded the predetermined time.

8. The information distribution device of claim 4, wherein
the judgment subunit performs the judgment with respect to a predetermined length of the content, the predetermined length including the requested portion.

9. The information distribution device of claim 8, wherein
the judgment subunit performs the judgment with respect to the predetermined length that has been determined according to which of normal playback processing and special playback processing the one of the terminal devices is performing.

10. The information distribution device of claim 8, wherein the distribution control unit further includes
an additional information generation subunit operable to, when the content is being streamed to any of the terminal devices, generate additional information that visually represents a portion of the content that can be played back in the any of the terminal devices.

11. The information distribution device of claim 10, wherein
when the content is being streamed to two or more of the plurality of terminal devices, the additional information generation subunit generates, according to the distribution position information pieces, the additional information that additionally visually represents a portion of the content that can be played back in another one of the two or more terminal devices.

12. The information distribution device of claim 1, wherein
the distribution control information further includes information that indicates a range according to which the content can be streamed, and
the distribution control unit further judges whether each of the terminal devices exists in the range indicated by the distribution control information, and prohibits streaming of the content to a terminal device, from among the plurality of terminal devices, that has been judged to exist outside the range.

13. The information distribution device of claim 1, wherein
the distribution control information further includes information for determining, according to a content accumulation function of each of the terminal devices, whether streaming of the content can be performed, and
the distribution control unit further receives, from each of the terminal devices, attribute information indicating a presence or absence of the content accumulation function, and judges, according to the attribute information and the distribution control information, whether the content can be streamed.

14. The information distribution device of claim 1, further comprising:
a distribution control information generation unit operable to generate the distribution control information.

15. The information distribution device of claim 1, wherein
the hold unit and the distribution control unit have been constituted on a single integrated circuit.

16. A transmission device comprising:
a hold unit operable to hold a content;
a distribution control information generation unit operable to generate distribution control information that indicates a maximum number of devices to which a same portion of the content can be streamed; and
a transmission unit operable to transmit the content and the distribution control information to a transmission-destination device.

17. An information distribution system including a transmission device, a server device, and a plurality of terminal devices,
the transmission device comprising:
a hold unit operable to hold a content;
a distribution control information generation unit operable to generate distribution control information that indicates a maximum number of the terminal devices to which a same portion of the content can be streamed; and
a transmission unit operable to transmit the content and the distribution control information to the server device, and
the server device being connected to the plurality of terminal devices and comprising:
a reception unit operable to receive the content and the distribution control information from the transmission device; and
a distribution control unit operable to prohibit simultaneous distribution of the same portion of the content to a greater number of the terminal devices than the maximum number indicated by the distribution control information, permit simultaneous streaming of the same portion of the content to a same or smaller number of the terminal devices than the maximum number indicated by the distribution control information, and permit simultaneous distribution of differing portions of the content to an unlimited number of the terminal devices.

18. An information distribution method used in an information distribution device that is connected to a plurality of terminal devices and controls streaming of a content to the plurality of terminal devices, wherein
the information distribution device holds the content and distribution control information indicating a maximum number of the terminal devices to which a same portion of the content can be streamed, and
the information distribution method prohibits simultaneous streaming of the same portion of the content to a greater number of the terminal devices than the maximum number indicated by the distribution control information.
